# EUROPÄISCHE PATENTSCHRIFT

(11) **EP 0 535 025 B1**
(45) Veröffentlichungstag und Bekanntmachung des Hinweises auf die Patenterteilung: **30.08.1995**
(21) Anmeldenummer: 91910665.8
(22) Anmeldetag: 20.06.1991
(51) Int. Cl.: G21C 19/317

(54) **VERFAHREN UND EINRICHTUNG ZUR OXIDATION VON WASSERSTOFF**
PROCESS AND DEVICE FOR OXIDATION OF HYDROGEN
PROCEDE ET DISPOSITIF POUR L'OXYDATION DE L'HYDROGENE

(30) Priorität: 21.06.1990 DE 4019832
(43) Veröffentlichungstag der Anmeldung: 07.04.1993
(73) Patentinhaber: SIEMENS AKTIENGESELLSCHAFT, 80333 München (DE)
(72) Erfinder: ECKARDT, Bernd, D-6454 Bruchköbel (DE)
(86) Internationale Anmeldenummer: DE9100508
(87) Internationale Veröffentlichungsnummer: WO9120086

(56) Entgegenhaltungen:
- EP-A- 0 019 907
- DE-A- 3 739 720

## Beschreibung

Die Erfindung betrifft ein Verfahren zur Oxidation von Wasserstoff im Sicherheitsbehälter einer Kernreaktoranlage mit Hilfe von fein verteilten Katalysator-Partikeln. Sie richtet sich ferner auf eine dafür besonders geeignete Einrichtung.

Bei dem aus der DE-OS 29 22 717 bekannten Verfahren der obengenannten Art wird ein Katalysatorpulver, das möglichst trocken gehalten wird, mit Inertgas in den oberen Teil des Sicherheitsbehälters eingeblasen, damit es durch die Schwerkraft nach unten sinkt und so den ganzen Raum erfaßt. Mit solchen Verfahren lassen sich aufgrund der im trockenen Zustand im Katalysatorpulver herrschenden hohen Adhäsionskräfte auch mit aufwendigen Dispergiergeräten nur relativ große Agglomerate von z.B. 3 - 10 Mikrometer erzeugen. Solche Agglomerate sedimentieren schnell und führen aufgrund der kurzen Schwebezeiten zu geringen Wasserstoffabbauraten. Die für die Freisetzung der Agglomerate notwendigen hohen Strömungsgeschwindigkeiten führen zudem in feuchter Atmosphäre zu einer hohen Abscheidung der Agglomerate und somit zur katalytischen Desaktivierung.

Die Erfindung geht deshalb von der Aufgabe aus, mit einfachen Mitteln eine hocheffektive Feinstpartikelatmosphäre mit langen Schwebezeiten zu erzeugen. Diese soll sich in der zu oxidierenden Atmosphäre des Sicherheitsbehälters katalytisch noch wirksam entfalten können.

Die genannte Aufgabe wird erfindungsgemäß dadurch gelöst, daß die Katalysator-Partikel in Form einer Lösung oder Suspension innerhalb oder außerhalb des Sicherheitsbehälters verdüst werden, daß danach die verdüste Lösung oder Suspension innerhalb oder außerhalb des Sicherheitsbehälters durch Erhitzen getrocknet wird, wobei Aerosole entstehen, und daß die außerhalb des Sicherheitsbehälters entstandenen Aerosole in den Sicherheitsbehälter eingebracht werden.

Bevorzugt werden die Aerosole zum Aufsteigen im Inneren des Sicherheitsbehälters gebracht. Dies kann in einem kontinuierlichen Betrieb erfolgen. Durch die Wahl der Flüssigkeit für die Suspension oder Lösung und der Temperatur sowie gegebenenfalls durch eine zusätzliche Trocknung der Aerosolatmosphäre kann man sich in weiten Grenzen allen herrschenden Verhältnissen anpassen.

Die Lösung oder Suspension kann durch mehrere Düsen in den Sicherheitsbehälter eingebracht werden, um von Anfang an eine Verteilung in feine Tröpfchen zu haben. Besonders bei Verwendung von Zweistoffdüsen können Suspensionströpfchenkollektive von 3 bis 30 » erzeugt werden, die je nach Suspensionsfeststoffgehalt von 0,1 bis 10 % zu hochmobilen Feinstaerosolen im Bereich von 1 » und weniger austrocknen. Vor dem Verdüsen kann die Suspension oder Lösung auch erhitzt werden.

Mit umfangreichen Berechnungen und praktischen Erprobungen von Aerosolablagerungsprozessen in Versuchscontainments konnte nachgewiesen werden, daß die erfindungsgemäß erzeugten und verteilten Aerosole sich in unterschiedlichsten Atmosphären nur mit Abbauraten von durchschnittlich 0,5 pro Stunde abscheiden. Durch die Freisetzung mit Geschwindigkeiten von weniger als 5 m/s läßt sich insbesondere in überhitzter Atmosphäre auch die Anlagerung an andere im Sicherheitsbehälter vorhandene Flüssigkeitströpfchen sowie die Bildung von Wasserhüllen um die Aerosole weitgehend vermeiden. Aufgrund dieser langen Aerosolschwebedauer (Platin-Partikel mit Durchmesser kleiner 0,5 ») können bei dem erfindungsgemäßen Verfahren bereits z.B. nach halbstündigem Betrieb Aerosolkonzentrationen im Sicherheitsbehälter erreicht werden, die kontinuierlich über z.B. 24 Stunden aufgrund der großen Katalysatoroberfläche und der kurzen Wasserstoffdiffusionswege zu errechneten Wasserstoffabbauraten von bis zu 1 kg pro Sekunde führen können und somit wesentlich zur Störfallbeherrschung beitragen. Weiterhin kann eine Katalysatordesaktivierung durch Katalysatorgifte durch ständige Aerosolneuerzeugung weitgehend kompensiert werden.

Es ist ferner möglich, die Lösung oder Suspension erst unmittelbar vor dem Einbringen in den Sicherheitsbehälter zu erzeugen, vorzugsweise nach einer Vorwärmung. Man vermeidet damit lange Standzeiten mit der Gefahr unerwünschter chemischer oder physikalischer Veränderungen. Dies gilt auch dann, wenn die Lösung oder Suspension außerhalb des Sicherheitsbehälters erzeugt wird, wo die Beschickung und Wartung im allgemeinen einfacher sein dürfte.

Eine vorteilhafte Weiterbildung der Erfindung besteht darin, daß die Erzeugung der Lösung oder Suspension in Bezug auf die Menge der verdüsten Suspension oder Lösung oder die Konzentration der Katalysator-Partikel entsprechend dem Wasserstoffgehalt im Sicherheitsbehälter eingestellt oder geregelt wird. Hiermit läßt sich der Material- und Energieaufwand minimieren, was besonders bei Langzeitbetrieb wichtig sein kann.

Die genannte Aufgabe wird durch eine Einrichtung gelöst, die gekennzeichnet ist durch
- einen Behälter zur Aufnahme der Katalysator-Partikel in Form einer Lösung oder Suspension,
- eine Verteileranordnung zur Verdüsung der Lösung oder Suspension innerhalb oder außerhalb des Sicherheitsbehälters und
- eine Heizeinrichtung zum Trocknen der verdüsten Lösung oder Suspension, bevor diese im Sicherheitsbehälter freigesetzt wird.

Zur Ausübung des erfindungsgemäßen Verfahrens eignet sich besonders eine Vorrichtung, bei der am unteren Ende eines vertikalen Rohres eine Einlaßöffnung mit mindestens einem Treibkatalysator vorgesehen ist, bei der darüber eine mit der Lösung oder Suspension beaufschlagbare Düse sitzt, und bei der schließlich am oberen Ende des Rohres unter einem Deckel seitliche Auslaßöffnungen vorgesehen sind.

Das Rohr kann vorteilhafterweise über eine Leitung mit einem Druckbehälter verbunden sein, der in einem oberen Teil ein Treibgaspolster und Katalysator-Partikel enthält, während in einem unteren, durch eine Bruchmembran oder Berstscheibe abgeteilten Teil die Flüssigkeit untergebracht und die Leitung angeschlossen ist. Das Treibgaspolster drückt dann die Katalysator-Partikel mit der Flüssigkeit durch das Rohr, sobald z.B. durch das Öffnen eines Ventils der Auslaß freigegeben wird.

Zur schnellen Aerosolerzeugung, insbesondere beim Anfahren, kann oberhalb des Treibkatalysators oder Erhitzers ein Vorwärmbehälter zur Aufnahme einer geringen Suspensions- oder Lösungsmenge angeordnet sein.

Zur näheren Erläuterung der Erfindung werden anhand der Zeichnung Ausführungsbeispiele beschrieben. Dabei zeigt:
- FIG 1: schematisch den Sicherheitsbehälter einer Kernreaktoranlage in einem Vertikalschnitt;
- FIG 2: einen Ausschnitt aus einem Sicherheitsbehälter, ebenfalls in einem Vertikalschnitt;
- FIG 3: eine weitere Ausführungsform zur Oxidation in einem Vertikalschnitt in größerem Maßstab;
- FIG 4: eine Abwandlung der Ausführungsform nach Figur 3;
- FIG 5: eine Ausführungsform mit getrennten Tanks für die zur Lösung oder Suspension verwendete Flüssigkeit und für die Katalysator-Partikel, und
- FIG 6: eine außerhalb des Sicherheitsbehälters angeordnete Einrichtung zur Aerosolerzeugung mit einem Wärmespeicher.

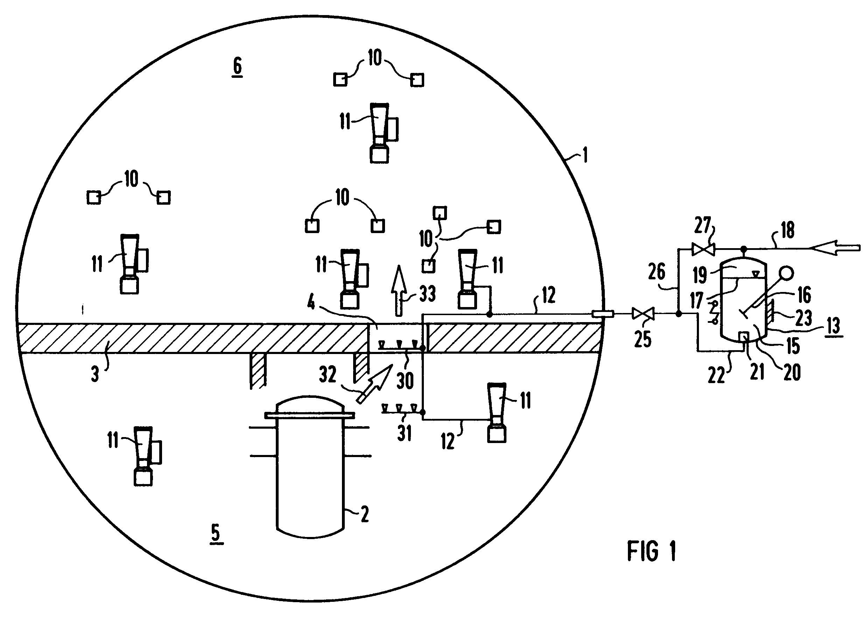

Der aus Stahl oder Spannbeton bestehende Sicherheitsbehälter 1 nach der Figur 1 gehört zu einer Kernreaktoranlage mit einem Druckwasserreaktor, von dessen Primärkreis nur der Reaktordruckbehälter 2 dargestellt ist. Er sitzt unterhalb einer Trennwand 3, in der eine Überströmöffnung 4 den unteren Teil 5 mit dem oberen Teil 6 verbindet.

Im oberen Teil 6 sind Zündeinrichtungen 10 räumlich verteilt angedeutet, die in bekannter Weise für das Abbrennen von Wasserstoff sorgen, wenn die lokale Konzentration die Zündgrenze von 4% übersteigt. Mit solchen Zündeinrichtungen 10, die auch im unteren Teil 5 angeordnet sein können, werden kurzzeitig anfallende Wasserstoffmengen durch thermische oder katalytische Reaktionsauslösung beseitigt.

Im unteren Teil 5 und im oberen Teil 6 sind mehrere Aerosolerzeuger 11 verteilt angeordnet, mit denen Katalysator-Partikel, z.B. aus Platin und/oder Palladium, in einer Flüssigkeit, vorzugsweise in Wasser, fein verteilt werden. Der Flüssigkeit können gegebenenfalls Zusätzen, z.B. Emulgatoren oder Mittel zur Viskositätserhöhung bei Raumtemperatur oder dgl., zugesetzt werden. Nach dem Verdüsen wird die in Form von Tröpfchen vorliegende Suspension oder Lösung durch Erhitzen getrocknet und im Sicherheitsbehälter zum Aufsteigen gebracht. Die zur Verteilung vorgesehene Suspension oder Lösung wird den Aerosolerzeugern 11 durch Leitungen 12 aus einem gemeinsamen Tank 13 zugeführt, der außerhalb des Sicherheitsbehälters 1 installiert ist.

Der Tank 13 enthält in seinem unteren Teil ein Suspensionsvolumen 15 mit einem Rührer 16 zur Homogenisierung. Über dem Suspensionsspiegel 17 ist eine Druckluftleitung 18 angeschlossen, so daß ein Treibgaspolster 19 gebildet wird. Am Boden 20 des Tanks 13 ist ein für die Katalysator-Partikel durchlässiges Filter 21 zur Rückhaltung von großen Agglomeraten angebracht. Das Filter 21 sitzt vor der Auslaßleitung 22. Der Tank 13 trägt außen eine thermische Isolierschicht, wie bei 23 angedeutet ist. Er kann auch beheizt werden.

Zur Beschickung der Aerosolerzeuger 11 wird ein Ventil 25 geöffnet, das im Zuge der Leitung 12 außerhalb des Sicherheitsbehälters 1 angeordnet ist. Dabei bleibt eine Umgehungsleitung 26 zum Tank 13 mit einem Ventil 27 verschlossen. Deshalb preßt der Überdruck des Treibgaspolsters das Suspensionsvolumen 15 in die Leitungen 12.

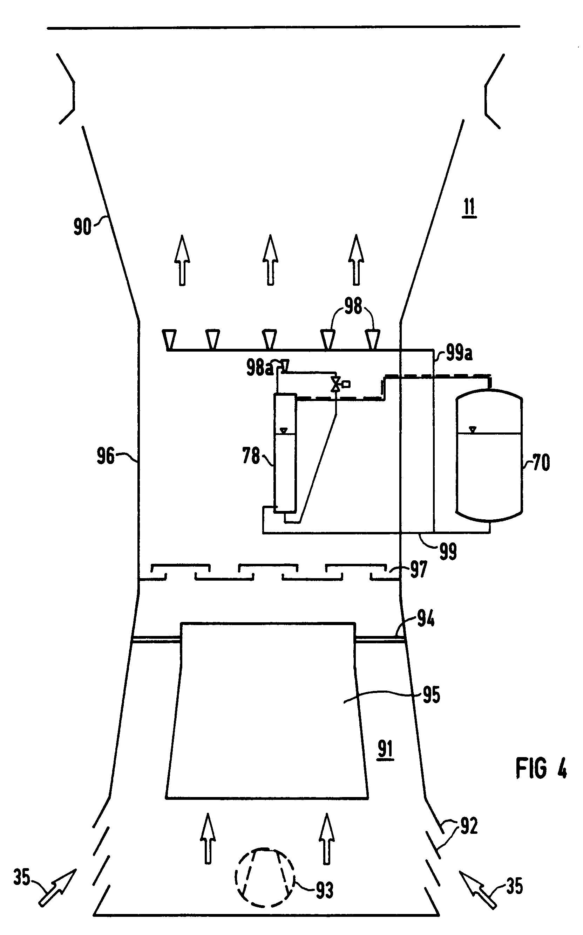

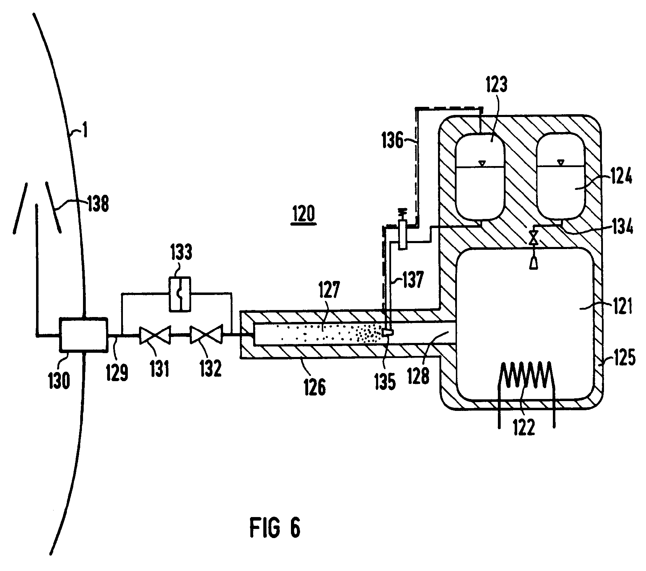

Über die Leitungen 12 gelangt die Suspension oder Lösung auch zu z.B. zwei Reihen von Düsen 30 und 31, die im Bereich der Überströmöffnung 4 angeordnet sind und einen aus dem unteren Teil 5 in den oberen Teil 6 aufsteigenden, durch die Pfeile 32 und 33 angedeuteten überhitzten und gegebenenfalls wasserstoffhaltigen Dampfstrom unmittelbar mit Suspension beaufschlagen. Während die Suspension aus den Reihen von Düsen 30, 31 durch den die Überströmöffnung 4 passierenden Dampfstrom nach oben mitgenommen wird, wird mit den Aerosolerzeugern 11 durch lokale Erhitzung eine nach oben gerichtete Verteilungsströmung erzeugt, wie später noch näher beschrieben wird. Die Menge der Suspension kann dabei insgesamt und in ihrem zeitlichen Verlauf durch eine entsprechende Steuerung des Ventils 25 eingestellt oder geregelt werden. Weiterhin kann durch die Führung einer getrennten Druckluft- oder Dampfleitung bis zu den Reihen von Düsen 30, 31 die Aerosolerzeugung vorteilhaft verfeinert werden, wie später in Figur 4 und 6 gezeigt ist.

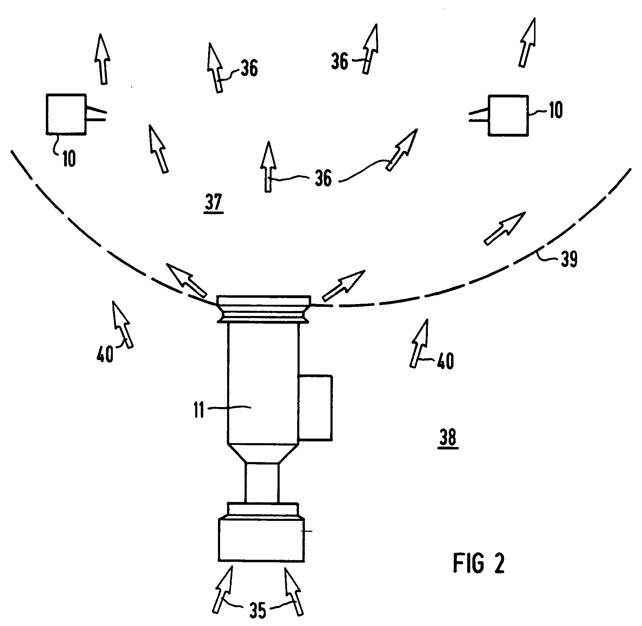

In Figur 2 ist schematisch dargestellt, daß ein Aerosolerzeuger 11, der z.B. einen seitlich angeordneten Suspensionsbehälter aufweist, im Sicherheitsbehälter 1 die wasserstoffhaltige Dampfatmosphäre entsprechend den Pfeilen 35 ansaugt. Wie die erhitzte Aerosolatmosphäre aufsteigt, wird durch die Pfeile 36 angedeutet. Im Sicherheitsbehälter 1 entsteht dadurch eine Überhitzungszone 37 im Gegensatz zu der darunter liegenden Nebelzone 38. Die gestrichelt angedeutete Grenze 39 ist in der Praxis eine Übergangszone. Die Pfeile 40 symbolisieren, daß durch die Überhitzungszone 37 auch außerhalb des Aerosolerzeugers 11 eine aufsteigende Strömung entstehen kann. Deshalb werden gleichzeitig die Zündvorrichtungen 10 mit wasserstoffreichem Dampf beaufschlagt.

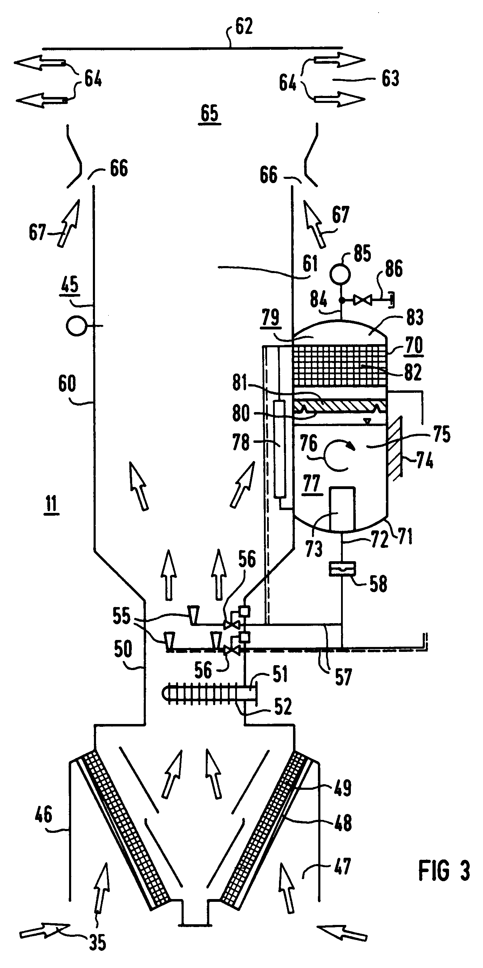

Der in Figur 3 in einem Vertikalschnitt dargestellte Aerosolerzeuger 11 hat ein in seinem Querschnitt mehrfach abgestuftes vertikales Rohr 45 als Gehäuse. Sein offenes unteres Ende 46 bildet eine Einlaßöffnung 47. Darin sind ein Vorfilter 48 und ein Überhitzungs- oder Treibkatalysator 49 schräg geneigt, bei rotationssymmetrischer Ausbildung kegelförmig, angeordnet. Mit gleicher Ausbildung könnte dort auch noch ein Erhitzer untergebracht sein.

Der darüber liegende Rohrteil 50 ist im Querschnitt auf etwa die Hälfte verengt. Er enthält eine Heizpatrone 51 mit Rippen 52. Über dieser sind Düsen 55 angeordnet, die über Regelventile 56 gespeist werden können. Die Speiseleitungen 57 führen zu einem Schaltelement 58, das z.B. mit einem temperaturabhängigen oder katalytischen Schmelzglied oder einem druckabhängigen Berstglied ausgerüstet ist. Zur schnellen Aerosolerzeugung, insbesondere beim Anfahren, kann ein mit einer geringen Suspensionsmenge befüllter Vorwärmer 78 direkt in einer Trockenzone 61 angeordnet sein.

Das erweiterte Teil 60 des Rohres 45 über der Verengung 50 ist doppelt so lang wie breit oder länger; es dient zur Auftriebserzeugung der die Aerosole tragenden Dampfatmosphäre und als Trockenzone 61. Das obere Ende ist mit einem Deckel 62 als Fallwindschutz verschlossen. Darunter liegen seitliche Auslaßöffnungen 63, durch die die Aerosolatmosphäre das Rohr 45 in Richtung der Pfeile 64 verläßt. Der Bereich 65 unter dem Deckel 62 ist etwas erweitert. Dort kann durch Einlaßöffnungen 66 angesaugte Umgebungsatmosphäre zugemischt werden, wie durch die Pfeile 67 angedeutet ist. Die Größe der Öffnungen 66 ist vorteilhaft einstellbar. Durch das teilweise Rückführen von bereits erzeugten Aerosolen und das Anlagern im Bereich der gesamten Aerosolerzeugungseinrichtung 11 erfolgt eine laufende Regeneration des Treibeffekts des Überhitzungskatalysators 49.

Bei dem Ausführungsbeispiel nach Figur 3 ist der im Inneren des Sicherheitsbehälters 1 angeordnete Aerosolerzeuger 11 direkt mit dem Tank 70 gekoppelt, der die Suspensions- und Treibdampfleitungen 57 speist. Er trägt auf seinem Boden 71 über dem Auslaß 72 ein Grobfilter 73 und auf der Außenseite eine Isolation 74. In der Flüssigkeit 75 kann z.B. durch lokale Beheizung und gegebenenfalls Kühlung eine Zirkulation erzeugt werden, wie durch den Pfeil 76 angedeutet ist.

Der untere Teil 77 des Tanks 70 ist durch eine Berstscheibe 80 abgeschlossen. Darauf ruht Katalysatorpulver 81. Es handelt sich z.B. um ein Feinpulver mit im statistischen Mittel einem Durchmesser von 0,2 bis 1,5 », das mit einem Fließmittel von wenigen Nanometern versetzt werden kann. Der Rest des oberen Teils 79 enthält, angelagert an ein Sorbens 82, z.B. ein Molekularsieb, ein Treibgas 83, z.B. Stickstoff unter einem Druck von 5 bis 20 bar. Am oberen Ende des Tanks 70 ist ein Anschluß 84 angebracht mit einem Druckmeßgerät 85 und einer Fülleitung 86 zum Befüllen.

Im Bedarfsfall, d.h. bei einem Störfall mit dem Auftreten von Wasserstoff, öffnet automatisch das Schaltelement 58. Dadurch wirkt der Überdruck des Treibgaspolsters 83 auf die Berstscheibe 80 und zerreißt sie. Das Katalysatorpulver 81 gelangt in die Flüssigkeit 75 und wird zusammen mit dieser durch die Düsen 55 ausgetragen. In der Verengung 50 entsteht ein Aerosolnebel mit einem Durchmesser der Katalysator-Partikel von 0,1 bis 2 », dessen Flüssigkeitströpfchen weniger als 30 » Durchmesser haben. Durch Erhitzung des Trägergases auf 50 °C über Umgebungstemperatur trocknen die Suspensionstropfen innerhalb von weniger als einer Sekunde zu einem Feinaerosol. Die darin enthaltenen Katalysator-Partikel werden über das Innere des Sicherheitsbehälters 1 langsam und kontinuierlich aufsteigend fein verteilt. Dabei kann die Beschickung dem Wasserstoffgehalt angepaßt und auch über längere Zeit, z.B. 24 Stunden, fortgesetzt werden. Alternativ könnte das Katalysatorpulver auch in der Flüssigkeit als Suspension mit Zusätzen, wie oben beschrieben, gelagert sein, bevor es ausgebracht wird.

Der in Figur 4 dargestellte Aerosolerzeuger 11 hat ein als Diffusor geformtes Rohr 90. In seinem unteren, sich schwach verengenden Bereich 91 ist neben Einlaßöffnungen 92 ein Hilfsgebläse 93 untergebracht, das besonders zur Leistungserhöhung vorteilhaft ist. Darüber sitzt in einer Trennwand 94 ein thermischer Rekombinator oder Erhitzer 95, z.B. ein Elektroerhitzer, so daß jeweils die gesonderte Aufstellung einer solchen Einrichtung entfallen kann. Im Bereich der Verengung 96 ist oberhalb eines Rückströmschutzes 97 ein Vorwärmer 78 angeordnet. Dieser kann über eine an dem Tank 70 angeschlossene Leitung 99 mit Katalysator-Lösung oder Katalysator-Suspension gespeist werden. Oberhalb des Vorwärmers 78 ist eine Reihe von Düsen 98 über den Rohrquerschnitt verteilt, die über einen Zweig 99a der Leitung 99 mit Katalysator-Lösung oder -Suspension beschickt werden kann. Zur schnellen Aerosolerzeugung kann die geringe Suspensionsmenge im Vorwärmbehälter 78 durch die entsprechend den Pfeilen 35 angesaugte und beim Passieren des Erhitzers 95 auf etwa 300° C bis 500° C aufgewärmte Dampfatmosphäre in kurzer Zeit erhitzt und durch eine Düse 98a ausgetragen werden.

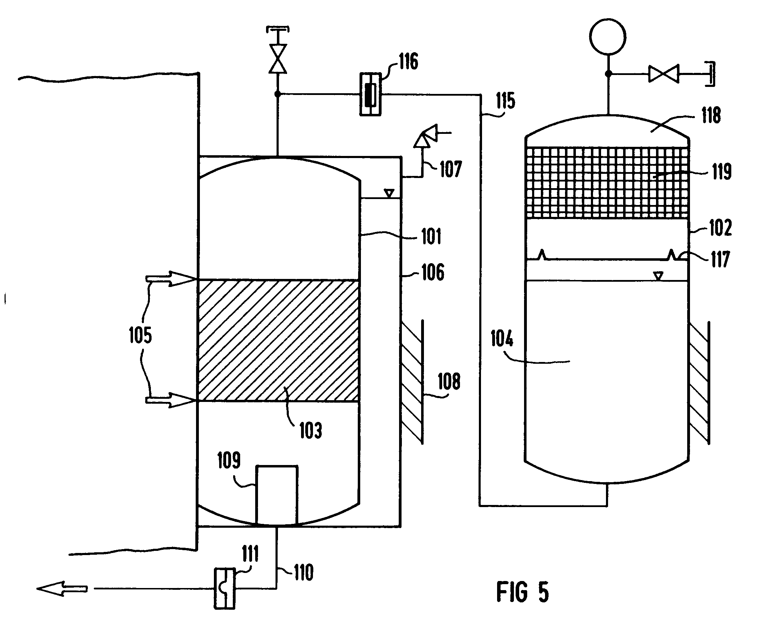

Bei dem Ausführungsbeispiel nach Figur 5 ist zu sehen, daß zwei getrennte Tanks 101 und 102 zur Bereitstellung der Katalysator-Partikel 103 bzw. der Flüssigkeit 104 verwendet werden können. Der Tank 101 wird, wie durch die Pfeile 105 dargestellt ist, durch Wärmeleitung auf z.B. 20 °C über Umgebungstemperatur gehalten. Als Überhitzungsschutz ist ein Flüssigkeitsmantel 106 vorgesehen, an dem oben ein-Überdruckventil 107 angeschlossen ist. Die Wärmeisolierung des Tanks 101 ist bei 108 angedeutet. Der mit einem vorgeschalteten Grobfilter 109 versehene Auslaß 110 führt über einen Membranschalter 111 zu einem nicht dargestellten Aerosolerzeuger.

Von der Oberseite des Tanks 101 führt eine Leitung 115 mit einem Schaltelement 116 zur Unterseite des Tanks 102. Dieser ist wieder mit einer Membran oder Folie 117 geteilt. Über der Flüssigkeit 104 liegt der Treibgasraum 118, der als Sorbens z.B. ein Molekularsieb enthält.

Im Bedarfsfall öffnet automatisch das Schaltelement 116. Dadurch wirkt der Überdruck des Treibgases im Treibgasraum 118 auf die Folie oder Membran 117 und zerreißt sie. Gleichzeitig öffnet der Membranschalter 111. Die Flüssigkeit 104 gelangt über die Leitung 115 in den Tank 101 und wird dort mit den Katalysator-Partikeln 103 zur Bildung der Lösung oder Suspension vermischt. Die Lösung oder Suspension gelangt über die Leitung 110 zum nicht dargestellten Aerosolerzeuger.

Bei dem Ausführungsbeispiel nach Figur 6 ist eine außerhalb des Sicherheitsbehälters 1 angeordnete Einrichtung 120 zur Aerosolerzeugung vorgesehen. Dabei wird in einem Wärmespeicher 121 ständig eine ausreichende Wärmemenge mittels einer elektrischen Heizvorrichtung 122 bereitgestellt. Der Wärmespeicher 121 sowie ein Suspensions- oder Lösungsbehälter 123 und ein Wasservorlagebehälter 124 sind in einer gemeinsamen wärmeisolierenden Ummantelung 125 angeordnet. An die Ummantelung 125 ist im Bereich des Wärmespeichers 121 ein horizontal angeordnetes wärmeisoliertes Rohr 126 angeschlossen. Der Innenraum des Rohres 126 bildet einen Kanal 127, der über eine Öffnung 128 in der Ummantelung 125 mit dem Wärmespeicher 121 in Verbindung steht. Eine an das Rohr 126 angeschlossene Leitung 129 ist durch eine Durchführung 130 in den Sicherheitsbehälter 1 geführt. In der Leitung 129 sind zwei hintereinander geschaltete Ventile 131 und 132 vorgesehen, denen eine Berstscheibe 133 parallel geschaltet ist. Im Bedarfsfall werden die Ventile 131 und 132 geöffnet. Die Erzeugung von Treibdampf erfolgt durch Eindüsen von Wasser aus dem Wasservorlagebehälter 124 über eine Leitung 134 in den Wärmespeicher 121. Das Ansprechen und die Einspeisung des Treibdampfes in den Sicherheitsbehälter 1 könnte auch durch den bei der Dampferzeugung entstehenden Druck über die Berstscheibe 133 erfolgen. In den überhitzten Dampfstrom wird mit Hilfe einer in dem Kanal 127 angeordneten Zweistoffdüse 135, die über zwei lotrechte Leitungen 136 und 137 mit dem Suspensionsbehälter 123 in Verbindung steht, Suspension über die Leitung 129 in den Sicherheitsbehälter 1 eingebracht. Dort werden die im Kanal 127 getrockneten katalytischen Aerosole mit Hilfe einer düsenförmigen Verteilungseinrichtung 138 verteilt. Sie steigen im Sicherheitsbehälter 1 auf und bilden einen schwebenden, katalytisch bei der Oxidation wirksamen Nebel.

## Patentansprüche

1. Verfahren zur Oxidation von Wasserstoff im Sicherheitsbehälter (1) einer Kernreaktoranlage mit Hilfe von fein verteilten Katalysator-Partikeln,
**dadurch gekennzeichnet,**
- daß die Katalysator-Partikel in Form einer Lösung oder Suspension innerhalb oder außerhalb des Sicherheitsbehälters (1) verdüst werden,
- daß danach die verdüste Lösung oder Suspension innerhalb oder außerhalb des Sicherheitsbehälters (1) durch Erhitzen getrocknet wird, wobei Aerosole entstehen, und
- daß die außerhalb entstehenden Aerosole in den Sicherheitsbehälter (1) eingebracht werden.

2. Verfahren nach Anspruch 1,
**dadurch gekennzeichnet,** daß die Aerosole zum Aufsteigen im Inneren des Sicherheitsbehälters (1) gebracht werden.

3. Verfahren nach Anspruch 1 oder 2,
**dadurch gekennzeichnet,** daß die Suspension oder Lösung durch mindestens eine von einer Leitung (12) gespeiste Düse (30, 31) in den Sicherheitsbehälter (1) eingebracht und dabei verdüst wird.

4. Verfahren nach Anspruch 1, 2 oder 3,
**dadurch gekennzeichnet,** daß die Suspension oder Lösung vor dem Verdüsen erhitzt wird.

5. Verfahren nach einem der Ansprüche 1 bis 4,
**dadurch gekennzeichnet,** daß Suspensionstropfen mit im statistischen Mittel einem Durchmesser von 3 bis 30 » sowie resultierende, die Katalysator-Partikel enthaltende Feststoffaerosole von 0,1 bis 2 » erzeugt werden.

6. Verfahren nach einem der Ansprüche 1 bis 5,
**dadurch gekennzeichnet,** daß die Aerosole in überhitztem Zustand mit einer Geschwindigkeit von weniger als 5 m/s im Sicherheitsbehälter (1) freigesetzt werden.

7. Verfahren nach Anspruch 6,
**dadurch gekennzeichnet,** daß die Überhitzung katalytisch erzeugt wird.

8. Verfahren nach einem der Ansprüche 1 bis 7,
**dadurch gekennzeichnet,** daß das Erhitzen mit einem thermischen Rekombinator (95) vorgenommen wird.

9. Verfahren nach einem der Ansprüche 1 bis 8,
**dadurch gekennzeichnet,** daß zur Aerosolerzeugung ein Überhitzerkatalysator (49) vorgesehen ist, dem Katalysator-Partikel enthaltende Aerosole zugeführt werden und der durch Anlagerung dieser katalytischen Aerosole regeneriert wird.

10. Verfahren nach einem der Ansprüche 1 bis 9,
**dadurch gekennzeichnet,** daß die Lösung oder Suspension unmittelbar vor dem Eindüsen in den Sicherheitsbehälter (1) innerhalb desselben erzeugt wird.

11. Verfahren nach Anspruch 10,
**dadurch gekennzeichnet,** daß die Lösung oder Suspension mit einer Flüssigkeit eingestellt wird, die vorgewärmt ist.

12. Verfahren nach einem der Ansprüche 1 bis 11,
**dadurch gekennzeichnet,** daß die Lösung oder Suspension außerhalb des Sicherheitsbehälters (1) erzeugt wird.

13. Verfahren nach einem der Ansprüche 1 bis 12,
**dadurch gekennzeichnet,** daß beim Verdüsen der Lösung oder Suspension im Sicherheitsbehälter (1) zum Erhitzen thermische Zündeinrichtungen (10) eingesetzt werden.

14. Verfahren nach einem der Ansprüche 1 bis 13,
**dadurch gekennzeichnet,** daß bei der Erzeugung der Lösung oder der Suspension die Menge der dabei verwendeten Flüssigkeit oder die Konzentration der dabei verwendeten Katalysator-Partikel abhängig vom Wasserstoffgehalt im Sicherheitsbehälter (1) eingestellt wird.

15. Einrichtung zur Oxidation von Wasserstoff im Sicherheitsbehälter (1) einer Kernreaktoranlage mit Hilfe von fein verteilten Katalysator-Partikeln, insbesondere nach einem der Ansprüche 1 bis 14,**gekennzeichnet durch**
- einen Behälter (13, 70, 123) zur Aufnahme der Katalysator-Partikel in Form einer Lösung oder Suspension,
- eine Verteileranordnung (30, 31, 55, 98, 135) zur Verdüsung der Lösung oder Suspension innerhalb oder außerhalb des Sicherheitsbehälters (1) und
- eine Heizeinrichtung (49, 95, 121) zum Trocknen der verdüsten Lösung oder Suspension, bevor diese in den Sicherheitsbehälter (1) freigesetzt wird.

16. Einrichtung nach Anspruch 15,
**dadurch gekennzeichnet,** daß am unteren Ende (46) eines vertikalen Rohres (45) eine Einlaßöffnung (47) mit mindestens einem Treibkatalysator (49) oder einem Erhitzer (95) vorgesehen ist, daß darüber eine mit der Lösung oder Suspension (75) beaufschlagbare Düse (55) sitzt, und daß am oberen Ende des Rohres (45) unter einem Deckel (62) seitliche Auslaßöffnungen (63) vorgesehen sind.

17. Einrichtung nach Anspruch 16,
**dadurch gekennzeichnet,** daß das Rohr (45) über eine Leitung (57) mit einem Druckbehälter (70) verbunden ist, der im oberen Teil (79) ein Treibgas- oder Dampfpolster (83) enthält, während im unteren, durch eine Bruchmembran oder Berstscheibe (80) abgeteilten Teil (77) die Lösung oder Suspension (75) untergebracht und die Leitung (57) angeschlossen ist.

18. Einrichtung nach Anspruch 16 oder 17,
**dadurch gekennzeichnet,** daß oberhalb des Treibkatalysators (49) oder des Erhitzers (95) ein Vorwärmebehälter (78) zur Aufnahme einer geringen Suspensions- oder Lösungsmenge angeordnet ist.

19. Einrichtung nach einem der Ansprüche 15 bis 18,
**dadurch gekennzeichnet,** daß die verdüste Lösung oder Suspension Feststoffaerosole aufweist, die im Mittel einen Durchmesser von 0,1 bis 2 » besitzen.

## Claims

1. Method for the oxidation of hydrogen in the containment (1) of a nuclear reactor plant with the aid of finely distributed catalyst particles, characterized in that
- the catalyst particles in the form of a solution or suspension are atomized inside or outside the containment (1),
- thereafter the atomized solution or suspension is dried by heating inside or outside the containment (1), whereby aerosols arise, and
- the aerosols arising on the outside are brought into the containment (1).

2. Method according to claim 1, characterized in that the aerosols are caused to rise in the interior of the containment (1).

3. Method according to claim 1 or 2,
characterized in that the suspension or solution is brought into the containment (1) by means of at least one nozzle (30, 31) supplied by a line (12) and is thereby atomized.

4. Method according to claim 1, 2 or 3,
characterized in that the suspension or solution is heated before atomization.

5. Method according to one of claims 1 to 4,
characterized in that suspension drops with a statistical mean diameter of 3 to 30 » and resulting solid aerosols of 0.1 to 2 » containing the catalyst particles are produced.

6. Method according to one of claims 1 to 5,
characterized in that the aerosols in the overheated state are released at a speed of less than 5 m/s in the containment (1).

7. Method according to claim 6, characterized in that the overheating is generated catalytically.

8. Method according to one of claims 1 to 7,
characterized in that the heating is undertaken with a thermal recombiner (95).

9. Method according to one of claims 1 to 8,
characterized in that for aerosol production an overheater catalyst (49) is provided, to which aerosols containing catalyst particles are supplied and which is regenerated by the accumulation of these catalytic aerosols.

10. Method according to one of claims 1 to 9,
characterized in that the solution or suspension is produced inside the containment (1) immediately before the spraying into the containment (1).

11. Method according to claim 10, characterized in that the solution or suspension is adjusted with a liquid which is preheated.

12. Method according to one of claims 1 to 11,
characterized in that the solution or suspension is produced outside the containment (1).

13. Method according to one of claims 1 to 12,
characterized in that during the atomizing of the solution or suspension in the containment (1) thermal ignition devices (10) are used for the heating.

14. Method according to one of claims 1 to 13,
characterized in that during the production of the solution or the suspension the quantity of the liquid used in the process or the concentration of the catalyst particles used in the process is adjusted in dependence upon the hydrogen content in the containment (1).

15. Device for the oxidation of hydrogen in the containment (1) of a nuclear reactor plant with the aid of finely distributed catalyst particles, in particular according to one of claims 1 to 14, characterized by
- a container (13, 70, 123) to contain the catalyst particles in the form of a solution or suspension,
- a distributor arrangement (30, 31, 55, 98, 135) to atomize the solution or suspension inside or outside the containment (1) and
- a heating device (49, 95, 121) to dry the atomized solution or suspension before it is released into the containment (1).

16. Device according to claim 15, characterized in that at the lower end (46) of a vertical tube (45) an inlet opening (47) with at least one driving catalyst (49) or a heater (95) is provided, in that over it there is disposed a nozzle (55) which can be loaded with the solution or suspension (75), and in that at the upper end of the tube (45) under a cover (62) lateral outlet openings (63) are provided.

17. Device according to claim 16, characterized in that the tube (45) is connected by way of a line (57) to a pressure vessel (70) which in the upper part (79) contains a propellant-gas or vapour cushion (83), while in the lower part (77) divided by a rupture diaphragm or bursting disc (80) the solution or suspension (75) is accommodated and the line (57) is connected.

18. Device according to claim 16 or 17,
characterized in that above the driving catalyst (49) or the heater (95) a preheating container (78) is arranged to contain a small quantity of suspension or solution.

19. Device according to one of claims 15 to 18,
characterized in that the atomized solution or suspension has solid aerosols which have an average diameter of 0.1 to 2 ».

## Revendications

1. Procédé d'oxydation de l'hydrogène dans une enceinte de confinement (1) d'une installation à réacteur nucléaire à l'aide de particules de catalyseur à l'état finement divisé,
caractérisé en ce qu'il consiste
- à pulvériser les particules de catalyseur sous la forme d'une solution et d'une suspension à l'intérieur ou à l'extérieur de l'enceinte de confinement (1),
- à sécher la solution ou la solution pulvérisée à l'intérieur ou à l'extérieur de l'enceinte de confinement (1) en la chauffant, ce qui crée des aérosols, et
- à introduire les aérosols créés à l'extérieur dans l'enceinte de confinement (1).

2. Procédé suivant la revendication 1,
caractérisé en ce qu'il consiste à mettre les aérosols à l'intérieur de l'enceinte de confinement (1) pour qu'ils s'élèvent.

3. Procédé suivant la revendication 1 ou 2,
caractérisé en ce qu'il consiste à introduire et à pulvériser la suspension ou la solution dans l'enceinte de confinement (1) par au moins une buse (30, 31) alimentée par un conduit (12).

4. Procédé suivant la revendication 1, 2 ou 3,
caractérisé en ce qu'il consiste à chauffer la suspension ou la solution avant de la pulvériser.

5. Procédé suivant l'une des revendications 1 à 4,
caractérisé en ce qu'il consiste à produire des gouttelettes de suspension ayant en moyenne statistique un diamètre de 3 à 30 » ainsi que des aérosols de matière solide, de 0,1 à 2 » en résultant et contenant les particules de catalyseur.

6. Procédé suivant l'une des revendications 1 à 5,
caractérisé en ce qu'il consiste à dégager les aérosols à l'état surchauffé à une vitesse inférieure à 5 mètres à la seconde dans l'enceinte de confinement (1).

7. Procédé suivant la revendication 6,
caractérisé en ce qu'il consiste à obtenir la surchauffe par voie catalytique.

8. Procédé suivant l'une des revendications 1 à 7,
caractérisé en ce qu'il consiste à effectuer la surchauffe par un recombinateur (95) thermique.

9. Procédé suivant l'une des revendications 1 à 8,
caractérisé en ce qu'il est prévu pour la production d'aérosols un catalyseur (49) de surchauffeur, auquel sont envoyés des aérosols contenant des particules de catalyseur et qui est régénéré par le dépôt de ces aérosols catalytiques.

10. Procédé suivant l'une des revendications 1 à 9,
caractérisé en ce qu'il consiste à produire la solution ou la suspension juste avant sa pulvérisation dans l'enceinte de confinement (1) à l'intérieur de celle-ci.

11. Procédé suivant la revendication 10,
caractérisé en ce qu'il consiste à régler la solution ou la suspension par un liquide qui est préchauffé.

12. Procédé suivant l'une des revendications 1 à 11,
caractérisé en ce qu'il consiste à produire la solution ou la suspension à l'extérieur de l'enceinte de confinement.

13. Procédé suivant l'une des revendications 1 à 12,
caractérisé en ce qu'il consiste à utiliser lors de la pulvérisation de la solution ou de la suspension dans l'enceinte de confinement (1) pour le chauffage des dispositifs d'allumage (10) par voie thermique.

14. Procédé suivant l'une des revendications 1 à 13,
caractérisé en ce qu'il consiste pour la production de la solution ou de la suspension à régler la quantité de liquide utilisé ou la concentration des particules de catalyseur utilisées en fonction de la teneur en hydrogène de l'enceinte de confinement (1).

15. Dispositif d'oxydation de l'hydrogène dans une enceinte de confinement (1) d'une installation à réacteur nucléaire à l'aide de particules de catalyseur à l'état finement divisé, notamment suivant l'une des revendications 1 à 14, caractérisé par
- une cuve (13, 70, 123) de réception des particules de catalyseur sous la forme d'une solution ou d'une suspension,
- un dispositif de répartition (30, 31, 55, 98, 135) destiné à pulvériser la solution ou la suspension à l'intérieur ou à l'extérieur de l'enceinte de confinement (1), et
- un dispositif de chauffage (49, 95, 121) destiné à chauffer la solution ou la solution pulvérisée avant qu'elle se dégage dans l'enceinte de confinement (1).

16. Dispositif suivant la revendication 15,
caractérisé en ce qu'à l'extrémité (46) inférieure d'un tuyau (45) vertical est prévu un orifice (47) d'entrée ayant au moins un catalyseur (49) d'entraînement ou un dispositif de chauffage (95), en ce qu'au-dessus se trouve une buse (55) pouvant être alimentée en la solution ou la suspension (75), et en ce qu'à l'extrémité supérieure du tuyau (45) sont prévus sous un couvercle (62) des orifices (63) latéraux de sortie.

17. Dispositif suivant la revendication 16,
caractérisé en ce que le tuyau (45) communique par un conduit (57) avec une cuve (70) sous pression qui contient dans la partie supérieure (79) un matelas (83) de gaz d'entraînement ou de vapeur, tandis que la solution ou la suspension (75) est logée dans la partie (77) inférieure séparée par une membrane destinée à se rompre ou par un disque (80) destiné à se rompre, et le conduit (57) y est raccordé.

18. Dispositif suivant la revendication 16 ou 17,
caractérisé en ce qu'au-dessus du catalyseur (49) d'entraînement ou du réchauffeur (95) est montée une cuve (78) de préchauffage destinée à la réception d'une petite quantité de suspension ou de solution.

19. Dispositif suivant l'une des revendications 15 à 18,
caractérisé en ce que la solution ou la suspension pulvérisée comporte des aérosols à matière solide qui ont en moyenne un diamètre de 0,1 à 2 ».
